# EUROPEAN PATENT SPECIFICATION

(11) **EP 4 133 933 B1**
(45) Date of publication and mention of the grant of the patent: **23.07.2025**
(21) Application number: 21199057.7
(22) Date of filing: 27.09.2021
(51) Int. Cl.: A01D 46/28, A01B 73/00

(54) **GRAPE HARVESTING MACHINE**
TRAUBENERNTEMASCHINE
MACHINE DE RÉCOLTE DE RAISINS

(30) Priority: 09.08.2021 IT 202100004112 U
(43) Date of publication of application: 15.02.2023
(73) Proprietor: Az. Agricola Kante di Kante Eddy, 34011 Duino-Aurisina TS (IT)
(72) Inventor: KANTE, Eddy, 34011 Duino-Aurisina (TS) (IT)
(74) Representative: Simino, Massimo

(56) References cited:
- EP-A2- 2 441 321
- WO-A1-92/00670
- AU-B2- 444 811
- GB-A- 2 063 634
- US-A- 3 785 515
- US-A- 4 204 390
- US-A- 5 660 033
- US-B2- 10 011 972

## Description

### Field of the Invention

The present invention relates to a grape harvesting machine, in particular a harvesting machine designed for use for automated collection of bunch of grapes from respective rows.

More specifically, the present invention relates to a grape harvesting machine of the towed type, which is thus configured to be pulled by motor vehicles such as tractors or other agricultural vehicles.

These towed grape harvesting machines differ from autonomous self-propelled grape harvesting machines, not only for their being towed, but also for their smaller dimensions and a considerably simpler structure in general.

Autonomous machines have a central corridor for receiving the row, interposed at the wheel axle and extending along the longitudinal axis of the vehicle.

Respective beating arms are provided inside the corridor and laterally "beat" the vines with a back-and-forth reciprocating motion, thereby causing removal of bunch of grapes and grapes which fall onto and are collected by an underlying conveyor.

Then, the conveyor feeds the bunch of grapes toward further cleaning members for separating the stems from the cluster, to only retain the grapes.

As mentioned above, autonomous machines have a very complex structure due to the presence of the central corridor for receiving the row which extends at the wheel axle. Also, autonomous machines have a large size due to the need to form a corridor that is sufficiently high to accommodate the height of the vines within the vehicle.

In an attempt to simplify the structure and reduce the size of autonomous grape harvesters, towed grape harvesters like that of the present invention have been provided, which also have beating members for collecting bunch of grapes.

Here, the grape harvesting machine is pulled by the motor vehicle adjacent to the row, with the beating members straddling a respective row.

The beating members generally consist of a frame that laterally projects out of the trailer and defines two lateral sidewalls with the beating arms mounted thereto.

Thus, the frame straddles one of the rows, with its respective sidewalls arranged on opposite sides of the row, and is moved along the whole extent of the row.

The trailer also comprises the systems for conveying the bunch of grapes that fall due to the action of the beaters as well as the stem separating systems for cleaning and collecting grapes only.

The beating members are positioned relative to the row at the head of each row, i.e. in end zone which is not cultivated and is wide enough for operation of the agricultural equipment.

Once grape harvesting has been completed along an entire row, the motor vehicle moves off the trailer from the space between two rows of the vineyard and, at the same time, the respective frame from the row upon which the harvesting operation is being carried out. Then, the motor vehicle moves back toward the vines for realignment with a different inter-row space between two other rows, thus realigning the frame for receiving a new row.

It shall be noted that the beating systems that laterally project out of the vehicle cause serious drawbacks due to the offset position of the center of gravity of the trailer.

This is because the rows of vines are generally cultivated on hillsides and on steep terrain in general. Therefore, while vineyards are cultivated on substantially flat "terraced" surfaces, the head areas of each row (the maneuver areas for the vehicle) may have steep slopes.

Here, the presence of the side frame may cause the trailer to tip over under tilt conditions with downstream-facing beating members.

In this respect, it should be noted that the beating members have a large mass due to both the dimensions of the sidewalls, which must extend to the entire height of the rows, and the presence of the arms and the members for moving them.

Therefore, under uneven ground or steep slope conditions, the maneuver operations at the heads of the rows may be complex or even dangerous as the vehicle is likely to tip over on slopes.

A further serious drawback of these grape harvesting machines is the difficulty of correctly aligning the beating members with the extent of the entire row. It should also be noted that the rows may not be perfectly straight and hence the vehicle is required to move slowly, to be able to correct its position as it moves forward. The presence of uneven ground at the head regions makes alignment of the frame with the rows even more difficult.

Therefore, the technical purpose of the present invention is to provide a grape harvesting machine that can obviate the aforementioned prior art drawbacks.

In particular, an object of the present invention is to provide a harvesting machine that is able to adapt to ground conditions, to prevent the machine from tipping over, particularly on steep slopes.

A further object of the present invention is to facilitate and speed up alignment operations at the head of the rows, while ensuring considerable stability of the entire machine.

Also, another object of the present invention is to provide a grape harvesting machine that can maintain its alignment as it moves forward between the rows, in spite of uneven ground conditions.

Finally, an object of the present invention is to provide a machine that has a simple structure and reduced dimensions.

The aforementioned technical purpose and objects are achieved by a grape harvesting machine as defined by the features of claim 1.

Further features and advantages of the present invention will result more clearly from the illustrative, non-limiting description of a preferred, non-exclusive embodiment of a grape harvesting machine.

Such description will be given hereinafter with reference to the accompanying drawings, which are provided by way of an illustrative, non-limiting example, in which:
- Figure 1 shows a perspective view of a grape harvesting machine of the present invention in an operating work condition in which it can harvest grapes from a respective row;
- Figures 2a and 2b show respective perspective views from different points of view of the machine of Figure 1 in an operating transport condition in which the beaters are in a laterally tilted/lying position;
- Figure 3 shows a perspective view of the machine of Figures 2a and 2b in an operating condition in which alignment with the rows of a vineyard is facilitated and
- Figure 4 is a perspective view of the machine of Figure 1 in an operating condition in which the harvested bunch of grapes are unloaded.

Referring to the accompanying figures, numeral 1 generally designates a grape harvesting machine of the invention.

In particular, the grape harvesting machine 1 is of the towed type, i.e. an agricultural machine designed to be pulled by a motor vehicle, such as a tractor (not shown in the accompanying figures and not covered by the scope of the present invention), between rows 2 of a vineyard. Reference will be made hereinafter to a tractor as a possible motor vehicle for pulling the harvesting machine 1.

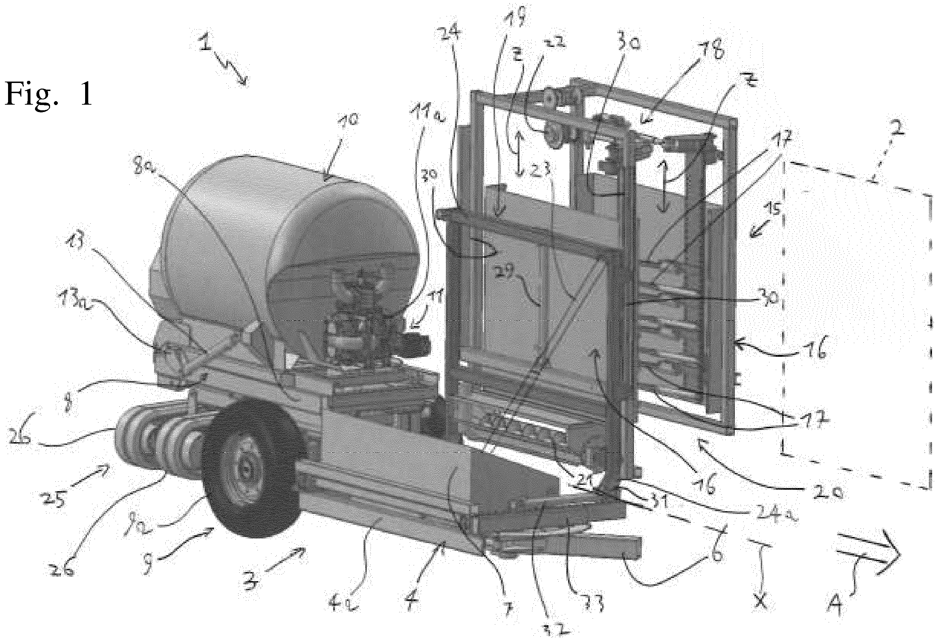

It should be noted that in Figure 1 the row 2 on which the machine operates to harvest bunch of grapes is illustrated as a hatched rectangle, i.e. only schematically and indicatively.

The machine 1 comprises a trailer 3 having respective means to move longitudinally 9 said trailer (3), by which the grape harvesting machine can be caused to move forward by being pulled by a tractor in the inter-row space between two rows 2 of a vineyard, in a traveling direction "A" (see Figure 1) parallel to such rows.

More in detail, the trailer 3 has a front portion 4, referring to the traveling direction "A", which is defined by a framework 4a equipped at its front end with a drawbar 6, designed to be associated with the aforementioned tractor which pulls the trailer 3 to cause it to move forward in the aforementioned traveling direction "A".

The drawbar 6 is defined by an articulated joint to allow the tractor to steer relative to the trailer 3. Moreover, the drawbar 6 allows the trailer 3 to move both in a direction transverse to the direction "A" and in a vertical direction for lifting the entire trailer 3, thereby facilitating the entry of the trailer 3 between the rows.

The trailer 3 further comprises a rear portion 8 adjacent to the front portion 4, with said means for longitudinal motion 9 being located thereat.

Preferably, the rear portion 8 has a respective framework 8a supported by said means to move longitudinally 9.

Preferably, according to the embodiment of the accompanying figures, the traveling means consist of a pair of wheels 9a arranged at the sides of the trailer 3.

Nevertheless, it should be noted that said means to move longitudinally 9 may be replaced by other equivalent traveling means, for example tracks.

The aforementioned wheels 9a are preferably driving wheels to promote the pulling action and the travel of the entire machine 1 by the tractor, for example, the wheels 9a are powered by respective hydraulic motors.

Preferably, the wheels 9a are connected to each other by means of a telescopic axle 14.

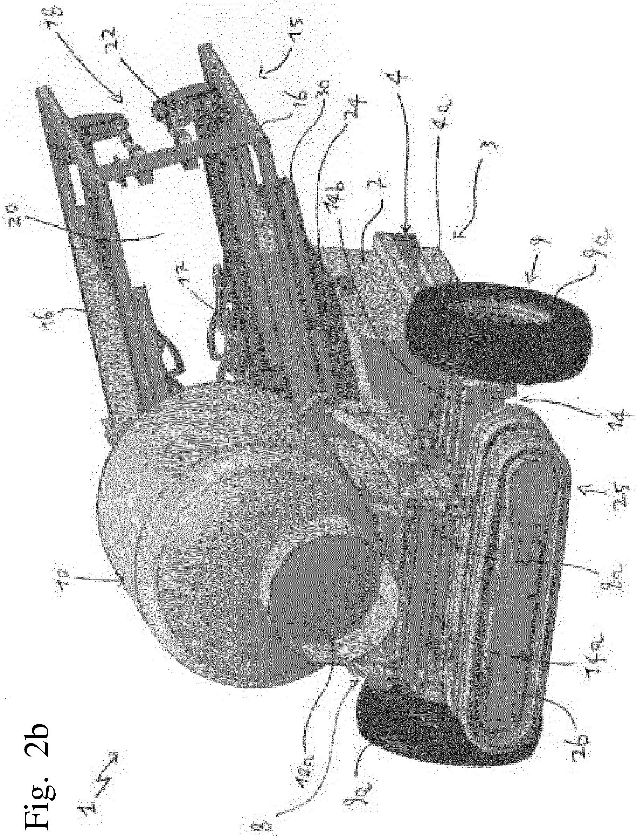

Namely, referring to Figure 2b, the axle 14 has a first portion 14a and a second portion 14b, both slidingly movable relative to the trailer 3 in a transverse direction, for individually and selectively varying the distance between the wheels 9a and from the trailer 3.

In other words, the first portion 14b can slide in the first portion 14a between a close-together position (as shown for example in Figure 1) in which the wheels 9a are both within the plan dimensions of the trailer 3, and a spread-apart position (as shown in Figure 2b) in which the wheel 9a located on the same side as the sidewall 7 and hence opposite to the row 2, projects laterally outside the dimensions of the trailer 3.

Advantageously, by varying the length of the axle 14, the gage width of the trailer 2 may be varied, i.e. the width of the trailer 2, specifically the transverse distance between the aforementioned wheels 9, may be adapted to the various conditions of the ground and to the width of the row in which the grape harvesting machine 1 is designed to move forward. For example, in case of sloped or very uneven ground, the axle 14 may be extended to widen the gage of the trailer and increase the stability of the entire machine 1.

The rear portion 8 of the trailer 3 supports a collection chamber 10 (in the example of the figures having a cylindrical shape and mounted to said framework 8a preferably at a higher level than the wheels 9), which is designed to contain the collected grapes.

For this purpose, according to the illustrated embodiment, the grape harvesting machine 1 is equipped with suction means 11, located at the front portion 4 of the trailer 3, to cause the inflow of grapes collected in the collection chamber 10, through appropriate suction ducts, not shown and not described in detail.

Preferably, the bunch of grapes and the grapes are drawn into the collection chamber 10 due to the suction generated in the aforementioned suction ducts by a negative pressure created by a controlled outflow of pressurized air which is caused to escape from a source of compressed air 11a, for example, a compressed air tank or a compressor, and which generates a negative pressure in the suction ducts to exert a dragging action.

Optionally, the suction may be also generated otherwise, for example by means of an impeller extractor or by means of pumps.

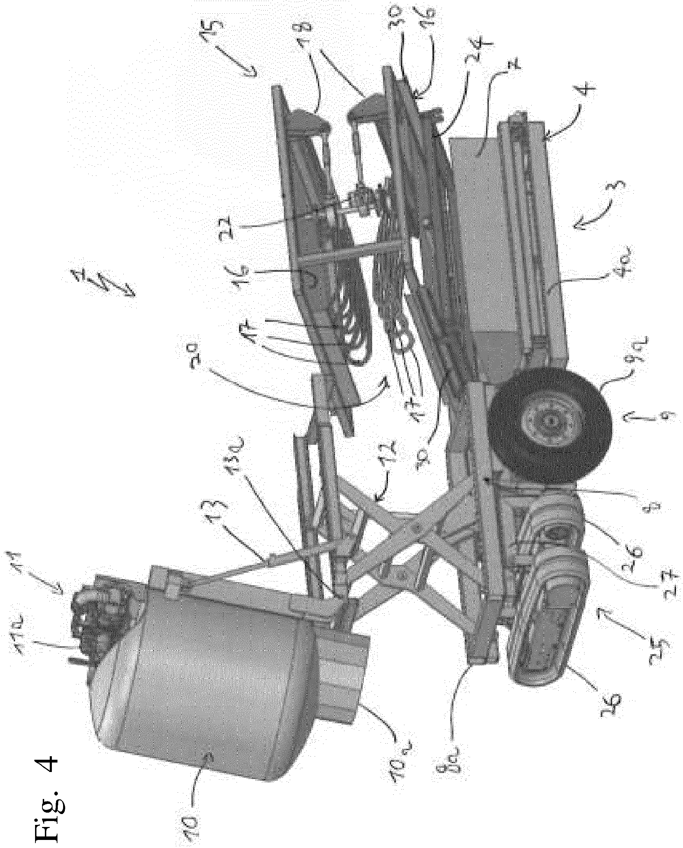

Preferably, the collection chamber 10 is supported by the framework 8a with interposition of a pantograph element 12 which is designed to lift and tilt the collection chamber 10 relative to the framework 8a (as shown in Figure 4). The pantograph element 12 is lifted relative to the framework 8a by an hydraulic actuator.

Also, the aforementioned pantograph element 12 comprises a support cradle at its top, for supporting the collection container 10. This support cradle is hinged to a rear end of the pantograph element 12, to be vertically tilted with respect to such pantograph element 12.

A hydraulic actuator 13 acts between the support cradle and the pantograph element 12 to move such support cradle to a tilted position in which the collection container 10 is tilted upwards and has a downwardly facing discharge opening 10a, as shown in figure 4, for the collected material to be unloaded by gravity.

The machine 1 also comprises a frame 15 associated with the trailer 3 and having at least one supporting wall 16 for a plurality of beating arms 17.

The frame 15 and the supporting wall 16 also support actuator means 18 for actuating the beating arms 17. These actuator means 18 are adapted to move the beating arms 17 with a reciprocating motion against the vines of the row 2 of a vineyard to cause removal of bunch of grapes.

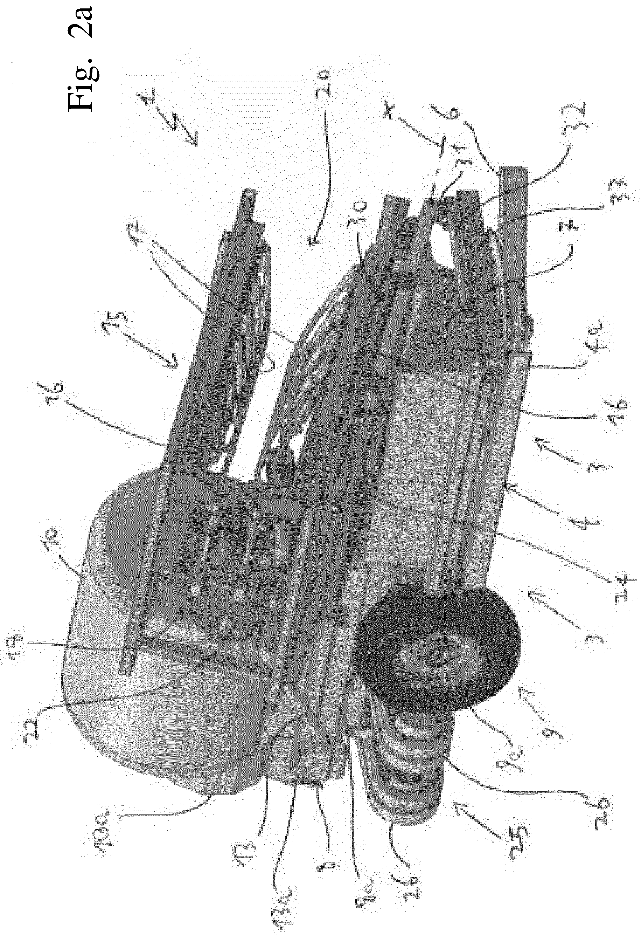

Advantageously, the trailer 3 further comprises at least one frame 15 moving member 19 for moving the frame 15 between an operating work position (Figure 1) in which the supporting wall 16 laterally projects with respect to the traveling direction "A" out of the plan dimensions of the trailer 3, and a return position (Figures 2a and 2b) in which the frame 15 is lying/tilted on the trailer 3 to fall to a greater extent within the plan dimensions of the trailer 3 as compared with the aforementioned work position.

In particular, it should be noted that in the aforementioned operating work position the supporting wall 16 of the frame 15 faces and is adjacent to one side of its respective row 2. Here, the aforementioned supporting wall 16 extends in a plane parallel to the plane of longitudinal extension of the row 2.

In the aforementioned return position of the frame 15, the supporting wall 16 is moved away from the row 2 and is overturned to lie on a plane transverse to the plane of longitudinal extension of the row 2.

Preferably, according to a preferred embodiment of the present invention, as shown in the accompanying figures, the frame 15 comprises a pair of facing supporting walls 16 defining a corridor 20 therebetween to receive the vines of a respective row 2 (Figure 1).

More in detail, when the frame 15 is in the aforementioned operating work position, the aforementioned supporting walls 16 straddle the row 2, with their respective supporting walls 16 facing the opposed longitudinal sides of the same row 2.

It should be noted that in this operating work configuration, the aforementioned supporting walls 16 lie on planes substantially parallel to the plane of longitudinal extension of the row 2.

Conversely, in the aforementioned return position of the frame 15, the aforementioned supporting walls 16 are both lying/tilted on the trailer 3, away from the row 2.

Preferably, each supporting wall 16 has respective pluralities of beating arms 17 one on top of the other and held inside the corridor 20 to interfere with the vines of the row 2. For this purpose, the arms 17 are preferably shaped as "loops" to better fit between the vines and, as a result of their reciprocating movement, to cause removal of the bunch of grapes.

The supporting walls 16 also define a bottom surface (not shown) to intercept the bunch of grapes and the grapes falling from the vines, which consists, for example, of a series of horizontal plates. Conveyor means 21, preferably an auger, is also provided, which transfers the bunch of grapes from the plates toward the aforementioned suction means 11.

Actuator means 18 for actuating the arms also extend into the corridor 20, and have a motor 22 in a top region of the frame 15 and a motion transmission mechanism connecting the plurality of arms 17 of each supporting wall 16 to the motor 22.

Furthermore, the frame 15 is equipped with at least one hydraulic actuator 29 designed to allow the entire frame 15 to be lifted and lowered in a vertical direction "Z" perpendicular to the traveling direction "A". The aforementioned hydraulic actuator 29 is located outside the corridor 20 and on the side of such corridor that faces the trailer 3.

As shown in Figure 1, the hydraulic actuator 29 preferably comprises a piston secured to a support structure 24, as described below in further detail, and acting on the supporting wall 16 that is closer to the trailer 3.

Thus, the entire frame 15 is able to slide on guides 30 formed on the structure 24 to be lifted/lowered along the direction "Z". In view of the above, the frame 15 can be advantageously adjusted in height relative to the ground to adapt to the height of the vine rows, to be able to place the arms 17 in the best position to act on the bunch of grapes.

Preferably, moving member 19 of the frame 15 comprises at least one actuator 23, preferably of the hydraulic type, such as a hydraulic piston, located in such position as to act between the trailer 3 and the wall of the frame 15 that is closer to the trailer 3 (see fig. 1).

More particularly, the actuator 23 has a first end associated with the front portion 4 of the trailer 3, and a second end connected to the frame 15, in this example to a support structure 24 designed to support the supporting wall 16 that is closer to the trailer 3. Therefore, the aforementioned support structure 24 is connected to the supporting wall 16 that faces the trailer 3.

The support structure 24 has a pair of rotational joints 24a, which basically define rotation hinges, arranged below the base of the structure 24 and pivotally mounted to the frame 4a of the portion 4 of the trailer 3.

In short, due to the presence of the aforementioned rotational joints 24a, the frame 15 is hinged below a portion of the longitudinal side of the trailer 3 that is intended to be moved close to the row 2 on which the beating arms 17 must operate.

Therefore, the actuator 23 can move the frame 15 to reversibly rotate it relative to the rotational joints 24a from the aforementioned work position (see Figure 1) to the aforementioned return position, in which the frame 15, the supporting walls 16 and the corresponding beating arms 17 are transversely lying/tilted above the front portion 4 of the trailer 3 (see Figures 2a, 2b).

More in detail, the frame 15 can be moved between the aforementioned operating work and return positions, by the provision of the aforementioned joints 24a which allow the entire frame 15 to rotate about an axis of rotation "X" parallel to the traveling direction "A" of the trailer 3.

Advantageously, the frame 15 moving member 19 changes the position of the two supporting walls 16 relative to the trailer 3 by varying the attitude and distribution of the mass, and hence:
- in the work position of the frame 15, the trailer 3 has its center of gravity offset toward the frame 15, i.e. displaced toward the row 2 on which the beating arms 17 must operate, whereas
- in the return position of the frame 15, the trailer 3 has its center of gravity closer to the center of the trailer 3, to thereby provide greater stability of the trailer 3 during the displacement of the machine even on steep grounds.

It should be further noted that, in the aforementioned return position (see Figures 2a, 2b), the lying/inclined position of the frame 15, as well as the supporting walls 16 and the corresponding beating arms 17 can lower the center of gravity of the grape harvesting machine 1, which results in greater stability even in sloping ground conditions.

The joints 24a are engaged at a slide 31, which can slide under the action of at least one hydraulic piston 32, along a respective guide 33.

As shown in Figures 1 and 2a, the hydraulic piston 32 is associated with the framework 4a to push the slide 31 in a direction perpendicular to the traveling direction "A". As a result, the entire support structure 24, and hence also the frame 15, is moved away from/toward the row to adapt and adjust the relative position between the supporting walls 16 (and therefore of the arms 17) and the vines of the row 2 on which the beating arms 17 must operate.

The trailer 3 comprises means to move transversally 25 said trailer 3 which are adapted to move the trailer 3 in an alignment direction "Y" perpendicular to the traveling direction "A".

When the trailer 3 is moved along the alignment direction "Y", the entire grape harvesting machine 1 moves toward/away from its respective row 2.

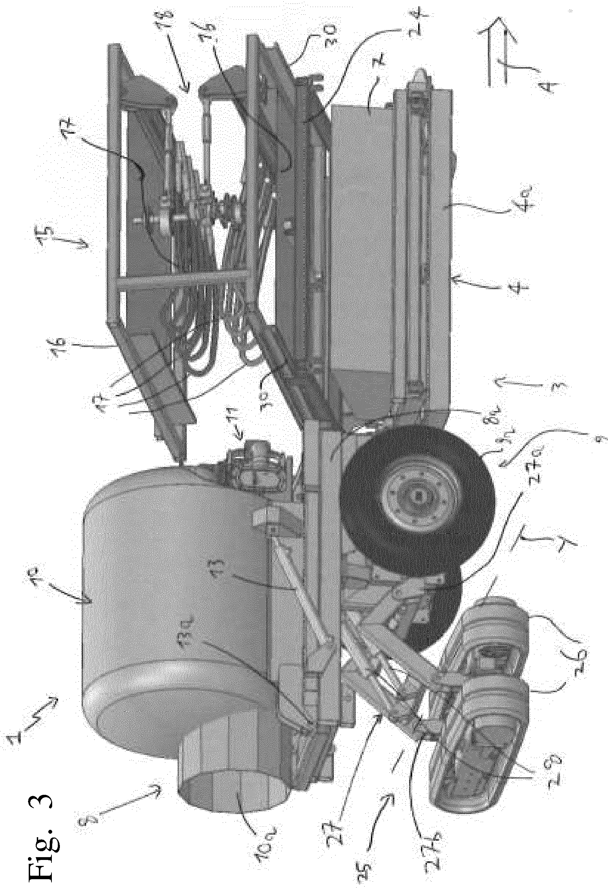

The aforementioned transverse movement means 25 comprise at least one motorized track 26 which extends along the aforementioned direction "Y" as shown in Figure 3.

Preferably, said at least one track 26 is powered, for example by a hydraulic motor.

Preferably, in order to impart greater stability to the entire trailer 3, two tracks 26 are provided side by side along the alignment direction "Y" and have the same direction of rotation.

The aforementioned means to move transversally 25 further comprise an extensible articulated arm 27 interposed between the tracks 26 and the rear portion 8 of the trailer 3 at which the means to move transversally 25 are located.

More particularly, according to the embodiment as shown in Figure 3, the aforementioned extensible articulated arm 27 has a first end 27a connected to the framework 8a of the rear portion 8 of the trailer 3 and a second end 27b engaged between the tracks 26.

The extensible articulated arm 28 has at least one actuator 28 associated therewith, preferably of the hydraulic type, such as a hydraulic cylinder, which is connected to the framework 8a to move the extensible articulated arm 27 and cause a reversible movement of the tracks 26 and the rear portion 8 of the trailer 2 away from and toward each other, thereby causing the trailer 3 to move between:
- a longitudinal travel position in which the tracks 26 are lifted from the ground and
- a position in which the tracks 26 rest on the ground and the aforementioned means to move longitudinally 9 are lifted from the ground thereby allowing aligned positioning of the trailer 3 in the transverse direction Y-Y.

Therefore, by reversibly operating on the aforementioned actuator 28, the trailer 3 is able to reversely move:
- from a lowered position (see Figures 1, 2a, and 2b) in which said means to move longitudinally 9 rest on the ground to allow the trailer 3 to travel in the longitudinal direction X-X, and the tracks 26 are lifted from the ground
- to a lifted position in which the tracks 26 rest on the ground (see Figure 3) and the means to move longitudinally 9, with the frame 4, the collection chamber 10, the frame 15, the supporting walls 16 and the corresponding beating arms 17, are lifted from the ground.

It should be noted that, when the trailer 3 is in the aforementioned lifted position, the trailer 3 is supported at the front by the tractor and at the rear by the extensible articulated arm 27 connected to the tracks 26.

In the aforementioned lifted position, the trailer 3 is adapted to be moved in the transverse direction Y-Y orthogonal to the axial direction X-X, for alignment with a row 2, the displacement of the trailer 3 in the transverse direction Y-Y being facilitated by the presence of the aforementioned means to move transversally 25.

In other words, in order to align the frame 15 and hence the respective corridor 20 with the longitudinal extent of a row 2, the actuator 28 moves the extensible articulated arm 27 to lower the tracks 26 which press on the ground and cause the entire trailer 3 to be lifted.

Thus, the tracks 26 can be rotatably moved, thereby causing a displacement of the rear portion 8 of the trailer 3b in the alignment direction "Y" for adjusting/correcting the orientation of the frame 15 and properly positioning the supporting walls 16 relative to the longitudinal extent of the row 2 on which the beaters must operate.

Obviously, this adjustment/correction is carried out by moving the trailer 3 toward/away from the row 2 using the tracks 26.

It should be noted that the grape harvesting machine 1 is preferably equipped with actuators and motors of hydraulic type. For this purpose, the grape harvesting machine comprises a plurality of hydraulic (oil-operated) pumps actuated by a power take-off of the tractor that pulls the grape harvesting machine.

In order to ensure proper operation of the aforementioned hydraulic oil-operated means, i.e. actuators or motors, the grape harvesting machine is also equipped with a oil hydraulic system, comprising a reservoir 7 for the hydraulic oil.

Preferably, this reservoir 7 is supported by the front portion 4 of the trailer 3 and is located at the longitudinal side of the trailer 3 opposite to the side from which the frame 15 projects when it is in said work position. Thus, the reservoir 7, which illustratively contains an amount of oil equal to two hundred liters or more, is located at the longitudinal side of the portion 4 of the trailer opposite to the longitudinal side of the trailer from which the frame 15, the supporting walls 16 and the corresponding beating arms 17 project.

This advantageously allows the mass of oil in the aforementioned reservoir 7 to be used as a counterweight to counterbalance the frame 15, with the supporting walls 16 and the corresponding beating arms 17 which project out of the trailer, when it is in the operating work position.

Preferably, the reservoir 7 has a top side that defines an inclined plane extending upwards from the center line of the grape harvesting machine 1 toward the longitudinal side of the trailer 3 opposite to the longitudinal side from which the frame 15 projects in said return position.

In actual use, the grape harvesting machine 1 as described above allows harvesting of bunch of grapes and grapes to be carried out by the beating arms 17 mounted to the supporting walls 16.

It should be noted that, in the work position (Figure 1) of the frame 15, the trailer 3 is caused to move by the tractor in the direction "A" with the frame 15 straddling a row 2 and the vines on which the beating arms 17 must operate.

As a result, as the trailer 3 travels along the row 2, the bunch of grapes and grapes are drawn into the chamber 10. At the end of the row 2, the frame 15 is moved off the row 2, and causes the trailer 3 to travel to a head region in which no rows 2 are provided. In this region, which may also have considerable ground slopes, the frame 15, with the supporting walls 16 and the corresponding beating arms 17, is moved by the actuator 23 to the return position in which it is transversely tilted/lying on the front portion 4 of the trailer 3 (see Figures 2a and 2b). Advantageously, this results in a better balance of the loads on board the grape harvesting machine 1, with a consequently increased stability.

In the aforementioned return position (see Figures 2a and 2b), the trailer 3 can be more easily maneuvered/moved, thereby reducing the tip-over risk even on steep ground, also thanks to the presence of the aforementioned means to move transversally 25.

Once the trailer 3 has been aligned in front of a new row 2, the frame 15 is repositioned by the actuator 23 in the operating work position (see Figure 1) for the corridor 20 defined between the opposed supporting walls 16 to straddle the new row 2.

It should be noted that, as described above, the operation of aligning the grape harvesting machine 1 with a new row 2 may be carried out when the trailer 3 is lifted by the actuator 28 relative to the tracks 26 to be moved by the tracks 26 in the direction "Y".

It should be noted that the tracks 26 impart considerable stability to the entire trailer 3 and also allow small transverse movements to correct the position of the trailer 3 relative to a row 2.

Advantageously, the drawbar 6 allows the trailer 3 to be both lifted and translated along the direction "Y".

Once the step of alignment with a new row has been completed, the trailer is repositioned on the ground, i.e. by causing the pair of wheels 9a to rest on the ground to resume the travel along the rows 2.

At the end of the harvesting steps, the chamber 10 is unloaded as shown in Figure 4. Here, as described above, the pantograph element 12 lifts the collection chamber 10 which is successively rotated with the opening 10a facing downwards.

It should be also noted that, in order to maintain the stability of the grape harvesting machine 1 even while the collection chamber 10 is being unloaded, with the collection chamber 10 lifted and tilted to project from the rear of the trailer 3, the tracks 26 may be conveniently lowered to contact with the ground without lifting the wheels 9a from the ground. The tracks 26 that contact the ground increase the support base of the trailer 3 as compared with the wheels 9a alone, particularly in the rear area of the trailer 3.

The present invention achieves considerable advantages and obviates the above discussed prior art drawbacks.

First, it should be noted that the grape harvesting machine 1, comprising the trailer 3 with all the berry collecting members, has a simple structure and reduced dimensions.

Furthermore, as described above, the presence of the frame 15 moving member 19 allows the frame 15 to be transversely tilted/laid on the trailer 3 in a configuration that imparts greater stability to the machine 1. This configuration can maintain the stability of the machine 1 even under steep ground conditions, as is typical in hillside vine cultivation.

Furthermore, the provision of the aforementioned means to move transversally 25 affords proper alignment of the frame 15 with respect to the row, while still ensuring stability due to the presence of the tracks 26.

In addition, also the telescopic axle 14 that can move the wheels 9a individually and independently away from each other and/or from the trailer 3 of the vehicle can adapt the machine 1 to the ground conditions, and always ensure stability when traveling between the rows 2.

Those skilled in the art will obviously appreciate that a number of changes and variants may be made to the grape harvesting machine as described hereinbefore to meet specific needs, without departure from the scope of the invention, as defined in the following claims.

Thus, for example, the harvesting machine has been shown in the figures with the beating means 17 on the left side, with reference to the traveling direction during grape harvesting, but it shall be understood that the machine can also have the beaters on the right side, in a mirror-like relationship to the illustrated arrangement.

## Claims

1. **A grape harvesting machine,** comprising:
- a trailer (3) extending in a prevailing longitudinal direction (X-X) between a front portion (4) and a rear portion (8) identified with reference to the traveling direction of said trailer (3);
- means to move longitudinally (9) said trailer, allowing said trailer (3) to travel along a respective longitudinal traveling direction (A) parallel to the longitudinal extent of a row (2) of vineyard;
- a frame (15) supported by said trailer (3) and having at least one supporting wall (16) comprising a plurality of beating arms (17) to cause removal of bunch of grapes and configured to face at least one side of said row (2);
- actuator means (18) for actuating said beating arms (17), housed on the respective supporting wall (16) of the frame (15), to impart a back-and-forth motion to the arms (17) against the vines,
- a collection chamber (10) supported by the rear portion (8) of the trailer (3) and designed to contain the collected grapes;
wherein:
- said frame (15) is supported and attached to said trailer (3) by means of hinging means (24a) to allow said frame (15) to reversibly move from an operating work position, wherein said supporting wall (16) comprising said beating arms (17) laterally projects from said trailer (3) in a direction (Y-Y) transverse to said longitudinal direction (X-X), to a return position in which said frame (15) is tilted and lying on said trailer (3) to fall to a greater extent within the plan dimensions of said trailer (3) and have its center of gravity more displaced toward the interior of said trailer (3) and
- said trailer (3) comprises at least one moving member (19) acting between said trailer and a portion of said frame for reversibly moving said frame (15) between said operating work position and said return position,
**characterized in that:**
- said trailer (3) comprises means to move transversally (25) said trailer (3), for causing said trailer (3) to travel in said direction (Y-Y) transverse to said longitudinal direction (X-X), preferably in an alignment direction (Y) perpendicular to said traveling direction (A), to move said trailer (3) away from or toward the row (2);
- said means to move transversally (25) comprise at least one motorized track (26) and an extensible articulated arm (27) having a first end (27a) connected to said rear portion (8) of said trailer (3) and a second end (27b) engaged with said at least one track (26) and
- said extensible articulated arm (27) has a driving actuator (28) associated therewith to cause a reversible movement of said at least one track (26) and said rear portion (8) of said trailer (3) away from or toward each other, and to cause said trailer (3) to move between:
• a longitudinal travel position in which said at least one track (26) is lifted from the ground and
• a position in which said at least one track (26) rests on the ground and said means to move longitudinally (9) are lifted from the ground thereby allowing adjusted orientation of the frame (15) with respect to the row (2) and aligned positioning of the trailer (3) in said transverse direction (Y-Y).

2. A machine as claimed in claim 1, wherein, in said work position of the frame (15), said at least one supporting wall (16) lies in a substantially vertical plane extending parallel to said longitudinal direction (X-X) so that, in operation, it will be in a plane parallel to the plane of longitudinal extension of the row (2), wherein in said return position of said frame (15) said at least one supporting wall (16) is transversely retracted toward the interior of said trailer (3).

3. A machine as claimed in claim 1 or 2, wherein said at least one supporting wall (16) of said frame (15) comprises a pair of facing supporting walls (16) defining a corridor (20) therebetween, which is intended to straddle the vines of a row (2), with the respective supporting walls (16) having beating arms (17) placed on opposite sides of said corridor, in said return position of said frame (15) said supporting walls (16) being both tilted/lying on said trailer (3).

4. A machine as claimed in any of claims 1 to 3 wherein, below respective beating arms (17), each supporting wall (16) comprises a bottom plane for intercepting the bunch of grapes falling from the vines and a conveyor means (21) for collecting and conveying said bunch of grapes.

5. A machine as claimed in any of claims 1 to 4, wherein said frame (15) is supported at said front portion (8) of said frame (15)

6. A machine as claimed in any of claims 1 to 5, wherein:
- said trailer (3) comprises a drawbar (6) located at said front portion (4);
- said means to move longitudinally (9), preferably a pair of wheels (9a), are located at said rear portion (8) of said trailer (3).

7. A machine as claimed in any one of claims 1 to 6, wherein:
- said trailer (3) supports, at said rear portion (8), a collection chamber (10) which is intended to receive the grapes collected during grape harvesting and
- said trailer (3) comprises lifting means (12) which are designed to lift the collection chamber 10 relative to said rear portion (8) of said trailer;
- said collection chamber (10) is supported by a support cradle hinged to one end of said lifting means (12) to be vertically tilted with respect to said lifting means
- said trailer (3) comprises an hydraulic actuator (13) for acting between said support cradle and said lifting means (12) to move said support cradle to a tilted position in which the collection container (10) is tilted upwards and has a downwardly facing discharge to facilitate unloading and outflow of the grapes from the collection chamber (10) through a discharge opening (10a).

8. A machine as claimed in any of claims 1 to 7, comprising suction means (11) for conveying the bunch of grapes of harvested grapes through suction ducts to said collection chamber (10).

9. A machine as claimed in any of claims 1 to 8, wherein:
- said means to move longitudinally (9) comprise a pair of wheels (9a) mounted at the longitudinal sides of said rear portion (8);
- the wheels (9a) of said pair of wheels are connected by a telescopic axle (14) and
- said telescopic axle (14) comprises a first portion (14a) and a second portion (14b) sliding relative to each other and to the trailer (3) to vary the distance between the wheels (9a) in said transverse direction between a close-together position in which said wheels (9a) are both within the plan dimensions of the trailer (3) and a spread-apart position in which a first wheel (9a) laterally projects out of the dimensions of said trailer (3),
wherein preferably said first wheel (9a) is the wheel located at the longitudinal side of said trailer (3) opposite to the longitudinal side from which said frame (15) projects when in said operating position.

10. A machine as claimed in any of claims 1 to 9, comprising an oil hydraulic system comprising an oil reservoir (7).

11. A machine as claimed in claim 10, wherein said tank (7) is supported by said front portion (4) of said trailer (3) and is located at a longitudinal side of said trailer (3) opposite to the side from which said frame (15) projects when in said work position to counterbalance the projecting load of said frame 15.

12. A machine as claimed in claim 11, wherein said reservoir (7) has a top side that defines an inclined plane extending upwards from the center line of said machine toward the longitudinal side of said trailer (3) opposite to the longitudinal side from which said frame (15) projects in said return position.

## Patentansprüche

1. **Traubenvollernter,** umfassend:
- einen Anhänger (3), der sich in einer vorherrschenden Längsrichtung (X-X) zwischen einem Vorderabschnitt (4) und einem Hinterabschnitt (8) erstreckt, die in Bezug auf die Fahrtrichtung des Anhängers (3) identifiziert werden;
- Mittel zum Bewegen des Anhängers in Längsrichtung (9), die dem Anhänger (3) ermöglichen, entlang einer entsprechenden Längsfahrsrichtung (A) parallel zu der Längsausdehnung einer Weinbergsreihe (2) zu fahren;
- einen Rahmen (15), der von dem Anhänger (3) getragen wird und mindestens eine Stützwand (16) aufweist, die eine Vielzahl von Rüttelarmen (17) umfasst, um die Entfernung von Trauben zu bewirken, und die dazu konfiguriert ist, mindestens einer Seite der Reihe (2) gegenüberzuliegen;
- Betätigungsmittel (18) zum Betätigen der Rüttelarme (17), die an der jeweiligen Stützwand (16) des Rahmens (15) aufgenommen sind, um den Armen (17) eine Hin- und Herbewegung gegen die Reben zu verleihen,
- eine Sammelkammer (10), die von dem Hinterabschnitt (8) des Anhängers (3) getragen wird und die ausgelegt ist, die gesammelten Trauben zu enthalten;
wobei:
- der Rahmen (15) mittels Scharniermittel (24a) an dem Anhänger (3) getragen und befestigt wird, um dem Rahmen (15) zu ermöglichen, sich reversibel von einer Arbeitsposition, in der die Stützwand (16) umfassend die Rüttelarme (17) seitlich von dem Anhänger (3) in einer Richtung (Y-Y) vorsteht, die sich quer zu der Längsrichtung (X-X) erstreckt, in eine Rückstellposition, in der der Rahmen (15) gekippt wird und auf dem Anhänger (3) liegt, so dass er in größerem Umfang in die Planabmessungen des Anhängers (3) fällt und sein Schwerpunkt mehr in das Innere des Anhängers (3) verschoben wird, und
- der Anhänger (3) mindestens ein bewegliches Element (19) umfasst, das zwischen dem Anhänger und einem Abschnitt des Rahmens wirkt, um den Rahmen (15) reversibel zwischen der Arbeitsposition und der Rückstellposition zu bewegen,
**dadurch gekennzeichnet, dass:**
- der Anhänger (3) Mittel zum Bewegen quer (25) des Anhängers (3) umfasst, sodass der Anhänger (3) in der Richtung (Y-Y) quer zu der Längsrichtung (X-X) fahren kann, vorzugsweise in einer Ausrichtungsrichtung (Y) senkrecht zu der Fahrtrichtung (A), um den Anhänger (3) weg von der Reihe (2) oder zu der Reihe zu bewegen;
- die Mittel zur Querbewegung (25) mindestens eine motorisierte Schiene (26) und einen ausfahrbaren Gelenkarm (27) umfassen, der ein erstes Ende (27a), das mit dem Hinterabschnitt (8) des Anhängers (3) verbunden ist, und ein zweites Ende (27b) aufweist, das mit der mindestens einen Schiene (26) in Eingriff steht, und
- der ausfahrbare Gelenkarm (27) einen Antriebsaktuator (28) aufweist, der ihm zugeordnet ist, um eine reversible Bewegung der mindestens einen Schiene (26) und des Hinterabschnitts (8) des Anhängers (3) voneinander weg oder aufeinander zu bewirken und um den Anhänger (3) zu veranlassen, sich dazwischen zu bewegen:
• eine Längsfahrposition, in der die mindestens eine Schiene (26) von dem Boden abgehoben wird, und
• eine Position, in der die mindestens eine Schiene (26) auf dem Boden aufliegt und die Mittel zur Längsbewegung (9) von dem Boden angehoben werden, wodurch eine angepasste Ausrichtung des Rahmens (15) in Bezug auf die Reihe (2) und eine ausgerichtete Positionierung des Anhängers (3) in der Querrichtung (Y-Y) ermöglicht werden.

2. Maschine nach Anspruch 1, wobei in der Arbeitsposition des Rahmens (15) die mindestens eine Stützwand (16) in einer im Wesentlichen Vertikalebene liegt, die sich parallel zu der Längsrichtung (X-X) erstreckt, so dass sie sich im Betrieb in einer Ebene befindet, die sich parallel zu der Ebene der Längserstreckung der Reihe (2) erstreckt, wobei die mindestens eine Stützwand (16) in der Rückstellposition des Rahmens (15) quer in das Innere des Anhängers (3) zurückgezogen wird.

3. Maschine nach Anspruch 1 oder 2, wobei die mindestens eine Stützwand (16) des Rahmens (15) ein Paar gegenüberliegender Stützwände (16) umfasst, die einen Korridor (20) dazwischen definieren, der dazu bestimmt ist, die Reben einer Reihe (2) zu überspannen, wobei die entsprechenden Stützwände (16) Rüttelarme (17) aufweisen, die auf gegenüberliegenden Seiten des Korridors angeordnet sind, wobei die Stützwände (16) in der Rückstellposition des Rahmens (15) beide auf den Anhänger (3) gekippt werden/liegen.

4. Maschine nach einem der Ansprüche 1 bis 3, wobei jede Stützwand (16) unter den jeweiligen Rüttelarmen (17) eine Bodenebene zum Auffangen der von den Reben fallenden Weintrauben und Fördermittel (21) zum Sammeln und Fördern der Weintrauben umfasst.

5. Maschine nach einem der Ansprüche 1 bis 4, wobei der Rahmen (15) an dem Vorderabschnitt (8) des Rahmens (15) getragen wird.

6. Maschine nach einem der Ansprüche 1 bis 5, wobei:
- der Anhänger (3) eine Zugstange (6) umfasst, die sich an dem Vorderabschnitt (4) befindet;
- die Mittel zur Längsbewegung (9), vorzugsweise ein Paar Räder (9a), an dem Hinterabschnitt (8) des Anhängers (3) angeordnet sind.

7. Maschine nach einem der Ansprüche 1 bis 6, wobei:
- der Anhänger (3) an dem Hinterabschnitt (8) eine Sammelkammer (10) trägt, die dazu bestimmt ist, die Weintrauben aufzunehmen, die bei der Weinernte gesammelt werden und
- der Anhänger (3) Hebemittel (12) umfasst, die ausgelegt sind, die Sammelkammer (10) gegenüber dem Hinterabschnitt (8) des Anhängers anzuheben;
- die Sammelkammer (10) von einem Trägerelement getragen wird, das an einem Ende der Hebemittel (12) scharniert wird, um in Bezug auf die Hebemittel vertikal geneigt zu werden;
- der Anhänger (3) einen hydraulischen Aktuator (13) umfasst, der zwischen dem Trägerelement und den Hebemitteln (12) wirkt, um das Trägerelement in eine gekippte Position zu bewegen, in der der Sammelbehälter (10) nach oben gekippt wird und einen nach unten gerichteten Abladepunkt aufweist, um das Entladen und den Austritt der Weintrauben aus der Sammelkammer (10) durch eine Abladeöffnung (10a) zu erleichtern.

8. Maschine nach einem der Ansprüche 1 bis 7 umfassend Saugmittel (11) zum Fördern der sammelten Weintrauben durch Saugleitungen in die Sammelkammer (10).

9. Maschine nach einem der Ansprüche 1 bis 8, wobei:
- die Mittel zur Längsbewegung (9) ein Paar Räder (9a) umfassen, die an den Längsseiten des Hinterabschnitt (8) eingebaut werden;
- die Räder (9a) des Paars Räder durch eine Teleskopachse (14) verbunden sind und
- die Teleskopachse (14) einen ersten Abschnitt (14a) und einen zweiten Abschnitt (14b) umfasst, die relativ zueinander und zum Anhänger (3) gleiten, um den Abstand zwischen den Rädern (9a) in der Querrichtung zwischen einer eng aneinanderliegenden Position, in der sich die beiden Räder (9a) in die Planabmessungen des Anhängers (3) fallen, und einer auseinander gespreizten Position, in der ein erstes Rad (9a) seitlich aus den Abmessungen des Anhängers (3) vorsteht, zu verändern,
wobei das erste Rad (9a) vorzugsweise das Rad ist, das sich an der Längsseite des Anhängers (3) befindet, die der Längsseite gegenüberliegt, von der der Rahmen (15) in der Betriebsposition vorsteht.

10. Maschine nach einem der Ansprüche 1 bis 9 umfassend ein ölhydraulischen System umfassend einen Ölbehälter (7).

11. Maschine nach Anspruch 10, wobei der Behälter (7) von dem Vorderabschnitt (4) des Anhängers (3) getragen wird und an einer Längsseite des Anhängers (3) angeordnet ist, die der Seite gegenüberliegt, von der der Rahmen (15) in der Arbeitsposition vorsteht, um die vorstehende Last des Rahmens (15) auszugleichen.

12. Maschine nach Anspruch 11, wobei der Behälter (7) eine Oberseite aufweist, die eine schräge Ebene definiert, die sich von der Mittellinie der Maschine nach oben in Richtung der Längsseite des Anhängers (3) erstreckt, die der Längsseite gegenüberliegt, von der der Rahmen (15) in der Rückstellposition vorsteht.

## Revendications

1. **Machine de récolte de raisins,** comprenant :
- une remorque (3) s'étendant dans une direction longitudinale dominante (X-X) entre une partie avant (4) et une partie arrière (8) identifiées par rapport à la direction de déplacement de ladite remorque (3) ;
- des moyens pour déplacer longitudinalement (9) ladite remorque, permettant à ladite remorque (3) de se déplacer le long d'une direction de déplacement longitudinale respective (A) parallèle à l'étendue longitudinale d'une rangée (2) de vignobles ;
- un cadre (15) supporté par ladite remorque (3) et comportant au moins une paroi de soutien (16) comprenant une pluralité de bras de battage (17) pour provoquer l'élimination de la grappe de raisin et configuré pour faire face à au moins un côté de ladite rangée (2) ;
- des moyens d'actionnement (18) pour actionner lesdits bras de battage (17), logés sur la paroi de support respective (16) du cadre (15), afin d'imprimer un mouvement de va-et-vient aux bras (17) contre les vignes,
- une chambre de collecte (10) soutenue par la partie arrière (8) de la remorque (3) et conçue pour contenir les raisins collectés ;
dans laquelle :
- ledit cadre (15) est supporté et fixé à ladite remorque (3) au moyen de moyens d'articulation (24a) pour permettre audit cadre (15) de se déplacer de manière réversible à partir d'une position de travail opérationnelle, dans laquelle ladite paroi de support (16) comprenant lesdits bras de battage (17) fait saillie latéralement à partir de ladite remorque (3) dans une direction (Y-Y) transversale à ladite direction longitudinale (X-X), vers une position de retour dans laquelle ledit cadre (15) est incliné et couché sur ladite remorque (3) pour tomber plus largement dans les dimensions en plan de ladite remorque (3) et avoir son centre de gravité plus déplacé vers l'intérieur de ladite remorque (3) et
- ladite remorque (3) comprend au moins un élément mobile (19) agissant entre ladite remorque et une partie dudit cadre pour déplacer de manière réversible ledit cadre (15) entre ladite position de travail et ladite position de retour,
**caractérisée en ce que** :
- ladite remorque (3) comprend des moyens pour déplacer transversalement (25) ladite remorque (3), pour faire voyager ladite remorque (3) dans ladite direction (Y-Y) transversale à ladite direction longitudinale (X-X), de préférence dans une direction d'alignement (Y) perpendiculaire à ladite direction de déplacement (A), pour éloigner ladite remorque (3) de la rangée (2) ou pour la rapprocher de celle-ci ;
- lesdits moyens de déplacement transversal (25) comprennent au moins une chenille motorisée (26) et un bras articulé extensible (27) ayant une première extrémité (27a) reliée à ladite partie arrière (8) de ladite remorque (3) et une seconde extrémité (27b) engagée dans ladite au moins une chenille (26) et
- ledit bras articulé extensible (27) est associé à un actionneur d'entraînement (28) pour provoquer un mouvement réversible de ladite au moins une chenille (26) et de ladite partie arrière (8) de ladite remorque (3) en les éloignant ou en les rapprochant l'une de l'autre, et pour faire en sorte que ladite remorque (3) se déplace entre les deux :
• une position de déplacement longitudinal dans laquelle ladite au moins une chenille (26) est soulevée du sol et
• une position dans laquelle ladite au moins une chenille (26) repose sur le sol et lesdits moyens de déplacement longitudinaux (9) sont soulevés du sol, ce qui permet d'ajuster l'orientation du cadre (15) par rapport à la rangée (2) et d'aligner le positionnement de la remorque (3) dans ladite direction transversale (Y-Y).

2. Machine selon la revendication 1, dans laquelle, dans ladite position de travail du cadre (15), ladite au moins une paroi de support (16) se trouve dans un plan sensiblement vertical s'étendant parallèlement à ladite direction longitudinale (X-X) de sorte que, en fonctionnement, elle se trouve dans un plan parallèle au plan d'extension longitudinale de la rangée (2), dans laquelle, dans ladite position de retour dudit cadre (15), ladite au moins une paroi de support (16) est rétractée transversalement vers l'intérieur de ladite remorque (3).

3. Machine selon la revendication 1 ou 2, dans laquelle ladite au moins une paroi de support (16) dudit cadre (15) comprend une paire de parois de support face à face (16) définissant un couloir (20) entre elles, destiné à être positionné à cavaliers sur les vignes d'une rangée (2), les parois de support respectives (16) ayant des bras de battage (17) placés sur les côtés opposés dudit couloir, dans ladite position de retour dudit cadre (15), lesdites parois de support (16) étant toutes deux inclinées/couchées sur ladite remorque (3).

4. Machine selon l'une quelconque des revendications 1 à 3 dans laquelle, sous les bras de battage respectifs (17), chaque paroi de support (16) comprend un plan inférieur pour intercepter la grappe de raisin tombant des vignes et un moyen de transport (21) pour collecter et transporter ladite grappe de raisin.

5. Machine selon l'une quelconque des revendications 1 à 4, dans laquelle ledit cadre (15) est soutenu sur ladite partie avant (8) dudit cadre (15).

6. Machine selon l'une quelconque des revendications 1 à 5, dans laquelle :
- ladite remorque (3) comprend un timon (6) situé sur ladite partie avant (4) ;
- lesdits moyens de déplacement longitudinaux (9), de préférence une paire de roues (9a), sont situés sur ladite partie arrière (8) de ladite remorque (3).

7. Machine selon l'une quelconque des revendications 1 à 6, dans laquelle :
- ladite remorque (3) supporte, sur ladite partie arrière (8), une chambre de collecte (10) destinée à recevoir les raisins récoltés lors de la récolte de raisins, et
- ladite remorque (3) comprend des moyens de levage (12) conçus pour soulever la chambre de collecte (10) par rapport à ladite partie arrière (8) de ladite remorque ;
- ladite chambre de collecte (10) est soutenue par un berceau de support articulé à une extrémité desdits moyens de levage (12) pour être incliné verticalement par rapport auxdits moyens de levage ;
- ladite remorque (3) comprend un actionneur hydraulique (13) agissant entre ledit berceau de support et lesdits moyens de levage (12) pour déplacer ledit berceau de support dans une position inclinée dans laquelle le récipient de collecte (10) est incliné vers le haut et présente une décharge orientée vers le bas pour faciliter le déchargement et l'écoulement des raisins de la chambre de collecte (10) à travers une ouverture de décharge (10a) .

8. Machine selon l'une quelconque des revendications 1 à 7, comprenant des moyens d'aspiration (11) pour transporter la grappe de raisins récoltés à travers des conduits d'aspiration jusqu'à ladite chambre de collecte (10) .

9. Machine selon l'une quelconque des revendications 1 à 8, dans laquelle :
- lesdits moyens de déplacement longitudinaux (9) comprennent une paire de roues (9a) montées sur les côtés longitudinaux de ladite partie arrière (8) ;
- les roues (9a) de ladite paire de roues sont reliées par un essieu télescopique (14) et
- ledit essieu télescopique (14) comprend une première partie (14a) et une seconde partie (14b) coulissant l'une par rapport à l'autre et par rapport à la remorque (3) pour faire varier la distance entre les roues (9a) dans ladite direction transversale entre une position rapprochée dans laquelle lesdites roues (9a) sont toutes deux dans les dimensions en plan de la remorque (3) et une position écartée dans laquelle une première roue (9a) dépasse latéralement des dimensions de ladite remorque (3),
dans laquelle, de préférence, ladite première roue (9a) est la roue située sur le côté longitudinal de ladite remorque (3) opposé au côté longitudinal à partir duquel ledit cadre (15) fait saillie lorsqu'il est dans ladite position de fonctionnement.

10. Machine selon l'une quelconque des revendications 1 à 9, comprenant un système hydraulique à huile comprenant un réservoir d'huile (7).

11. Machine selon la revendication 10, dans laquelle ledit réservoir (7) est supporté par ladite partie avant (4) de ladite remorque (3) et est situé sur un côté longitudinal de ladite remorque (3) opposé au côté à partir duquel ledit cadre (15) fait saillie lorsqu'il est dans ladite position de travail afin de contrebalancer la charge en saillie dudit cadre (15).

12. Machine selon la revendication 11, dans laquelle ledit réservoir (7) a un côté supérieur qui définit un plan incliné s'étendant vers le haut à partir de la ligne centrale de ladite machine vers le côté longitudinal de ladite remorque (3) opposé au côté longitudinal à partir duquel ledit cadre (15) fait saillie dans ladite position de retour.
